# EUROPÄISCHE PATENTSCHRIFT

(11) **EP 2 240 988 B1**
(45) Veröffentlichungstag und Bekanntmachung des Hinweises auf die Patenterteilung: **24.04.2013**
(21) Anmeldenummer: 09707336.5
(22) Anmeldetag: 03.02.2009
(51) Int. Cl.: H02G 3/12

(54) **VORRICHTUNG ZUR BEFESTIGUNG EINES INSTALLATIONSKASTENS IN EINER ÖFFNUNG IN EINER WANDSCHALE**
DEVICE FOR SECURING AN INSTALLATION BOX TO AN OPENING IN A WALL SHELL
DISPOSITIF DE FIXATION D'UNE BOITE D'INSTALLATION ELECTRIQUE DANS UN ORIFICE MENAGE DANS UNE PAROI MURALE

(30) Priorität: 04.02.2008 DE 102008008164; 22.08.2008 DE 102008039383
(43) Veröffentlichungstag der Anmeldung: 20.10.2010
(73) Patentinhaber: Hager Electro GmbH & Co. KG, 66440 Blieskastel (DE)
(72) Erfinder: THEUER, Markus, 66131 Saarbrücken (DE); PRAT, Julio, Milà, E-08402 Granollers (ES); NÚNEZ, Sergi, Tornos, E-08520 Les Franqueses del Vallès (ES)
(74) Vertreter: Bernhardt, Winfrid
(86) Internationale Anmeldenummer: PCT/DE2009/000166
(87) Internationale Veröffentlichungsnummer: WO 2009/097845

(56) Entgegenhaltungen:
- EP-A- 0 524 412
- EP-A- 1 703 605
- DE-A1- 2 355 826
- US-A- 1 793 187
- US-A- 3 283 937
- US-A- 5 931 432

## Beschreibung

Die Erfindung betrifft eine Vorrichtung zur Befestigung eines Installationskastens, insbesondere Verteilerkastens, in einer Wandschale, wobei der Installationskasten mit einem an seinem Öffnungsrand gebildeten Anschlag am Rand der Wandschalenöffnung gegen die Vorderseite der Wandschale anliegt, mit einem seitlich über die Kastenkontur hinaus ausschwenkbaren Verankerungselement, das die Wandschale an ihrem Öffnungsrand hintergreift, sowie mit einem von der Montageseite des Installationskastens her zugänglichen, eine Schraube umfassenden Schwenk-und Spannmechanismus für das Verankerungselement, der einer in ein Langloch in dem Verankerungselement einführbare Schraube aufweist.

Eine solche Vorrichtung geht aus der DE 23 55 826 hervor. Das Verankerungselement ist mit einem gummielastischen Ring derart vorgespannt, dass eine aufspreizende Belastung an ihm anliegt und der in einer Wand vorbereitete Durchbruch beim Einsatz der Vorrichtung in eine Wand ausschwenkt. Das Verankerungselement lässt sich mittels einer an einer Schraube geführten Mutter insgesamt verschieben.

Aus der EP 0 524 412 A2 geht ein Befestigungselement für ein mit einer Befestigungsbohrung versehenes Teil mit einer in ein vorgebohrtes Loch einsetzbaren dübelartigen Buchse hervor, in deren durchgehendem Loch ein mit einem Kopf versehener Stift durch etwa eine Vierteldrehung verriegelbar ist. Der Schaft des Stiftes weist einen Querschnitt auf, der auf gegenüberliegenden Seiten mit dem in Umfangsrichtung verlaufenden gewindeartigen schneidenden Stegen versehen ist.

Durch Benutzung sind solche Verankerungsvorrichtungen bekannt, bei denen die Verschwenkung des Verankerungselements über den gesamten Verschwenkbereich eine Drehung der Schraube des Schwenk- und Spannmechanismus erfordert.

Der Erfindung liegt die Aufgabe zugrunde, eine neue Verankerungsvorrichtung der eingangs erwähnten Art zu schaffen, die ein schnelleres Schließen und Lösen als die bekannten Vorrichtungen ermöglicht.

Die diese Aufgabe lösende Vorrichtung nach der Erfindung ist dadurch gekennzeichnet, dass der Schraubenquerschnitt der Schraube wenigstens eine Abflachung ihres Querschnitts aufweist und dass Einrichtungen zur direkten manuellen Verschwenkung des Verankerungselements unter Bewegung der abgeflachten Schraube relativ zum Langloch vorgesehen sind.

Vorteilhaft lässt sich das Verankerungselement über einen großen Teil seines Schwenkbereichs schnell bewegen und in eine Ausgangsposition für die endgültige Verankerung bringen. Durch Drehung der Schraube dann lediglich noch um 90° wird der Installationskasten abschließend in der Wandschalenöffnung befestigt.

Zweckmäßig sind an der Schraube zwei einander gegenüberliegende Abflachungen gebildet. Entsprechend groß ist bei Verdrehung der Schraube um 90° der wirksame Unterschied im Durchmesser.

Während es denkbar wäre, in den Wänden des Langlochs Gewindegangabschnitte zu bilden, schneidet in einer bevorzugten Ausführungsform der Erfindung das Schraubengewinde in die einander gegenüberliegenden Wände des Langlochs ein.

In weiterer vorteilhafter Ausgestaltung der Erfindung sind von der Schraube des Schwenk- und Spannmechanismus unabhängige Einrichtungen zum Halten des Verankerungselements in seiner verschwenkten Stellung vorgesehen.

Diese Halterungseinrichtungen können z.B. durch eine schwergängige Drehlagerung des Verankerungselements gebildet sein. Eine bevorzugte Ausführungsform für solche Halteeinrichtungen für das Verankerungselement bildet eine Rastung.

Schließlich könnten die Halteeinrichtungen auch dadurch gebildet sein, dass die in das Langloch eingeführte Schraube in dem Langloch schwergängig verschiebbar ist.

Als Einrichtungen zur direkten manuellen Verschwenkung des Verankerungselements kommt vor allem ein mit dem Verankerungselement verbundener Hebelarm in Betracht.

Zweckmäßig bildet das Verankerungselement einen zweiarmigen Hebel, wobei der kürzere der beiden Hebel der zur direkten manuellen Verschwenkung vorgesehene Hebel ist.

Vorzugsweise ist eine den Schwenkhebel und ggf. die Schraube umfassende, mit dem Installationskasten verbindbare Baueinheit vorgesehen, wobei insbesondere die Baueinheit über ein Trägerelement, an dem das Verankerungselement verschwenkbar gelagert ist, mit dem Installationskasten verbunden werden kann.

Vorzugsweise ist das Trägerelement zur Verbindung mit dem Installationskasten an dem Installationskasten einrastbar. In weiterer vorteilhafter Ausgestaltung der Erfindung weisen die oben genannten Halteeinrichtungen für das Verankerungselement eine zur Schwenkachse des Verankerungselements koaxiale Zahnung auf, in welche Rastnasen, insbesondere an dem Trägerelement gebildete Rastnase, eingreifen.

Vorzugsweise bildet das Trägerelement einen Deckel für ein in dem Installationskasten in jeder Ecke gebildetes Gehäuse, welches das Verankerungselement im geöffneten Zustand der Verankerung aufnimmt, wobei das Gehäuse eine Schlitzöffnung zum Ausschwenken des Verankerungselements aufweist.

In weiterer Ausgestaltung der Erfindung kann an der Unterseite des Schraubenkopfes ein Anschlag vorgesehen sein, der mit die Drehung der Schraube begrenzenden Anschlägen in einer hohlzylindrischen Schraubenführung zusammenwirkt. Vorteilhaft kann durch die Anschlagbegrenzung verhindert werden, dass die Schraube um mehr als 90° gedreht und damit die Schraubverbindung ungewollt wieder gelöst wird.

Die Schraube kann in entgegengesetzten Richtungen vom Schraubenschaft vorstehende Anschlagflügel aufweisen, wobei diese Anschlagflügel vorzugsweise auf der dem Schraubenkopf zugewandten Seite unmittelbar in den Schraubenkopf übergehen.

Vorteilhaft weisen die Anschlagflügel in der hohlzylindrischen Schraubenführung geführte Randflächen auf, die für eine exakte Positionierung der Schraube sorgen.

In weiterer vorteilhafter Ausgestaltung der Erfindung weisen die Anschlagflügel auf ihrer dem Schraubenkopf abgewandten Seite jeweils eine Abstufung auf.

Die Anschlagflügel können mit ihrer zur Schraubenachse senkrechten oder geneigten Stufenfläche auf einer eine Durchgangsöffnung aufweisenden Bodenwand der hohlzylindrischen Schraubenführung aufsitzen. Dadurch ist für eine genaue axiale Positionierung der Schraube gesorgt und damit gesichert, dass das Außengewinde der Schraube problemlos in ein entsprechend geformtes Innengewinde eingreifen kann. Schraubenpositionen, bei denen Zahn auf Zahn steht, sind ausgeschlossen.

Vorzugsweise liegen die Anschlagflügel mit einer zur Schraubenachse vorzugsweise parallelen Stufenfläche gegen die Innenfläche der Durchgangsöffnung an, was zur weiteren Führung der Schraube beiträgt.

Die Innenfläche kann im Winkelabstand von 90° angeordnete Rastelemente zur Verrastung mit einem an der betreffenden Stufenfläche gebildeten Gegenelementen aufweisen. Durch solche Rastvorgänge kann zuverlässig angezeigt werden, ob die gewünschte Drehposition, in der die Schraubverbindung geöffnet oder geschlossen ist, tatsächlich erreicht worden ist.

In weiterer Ausgestaltung der Erfindung stehen, zu den Anschlagflügeln um 90° versetzt, von dem Schraubenschaft in entgegengesetzten Richtungen weitere Flügel mit einer gegen die Innenfläche der Durchgangsöffnung anliegenden Randfläche vor. Auch hierdurch wird die Führung der Schraube weiter verbessert.

Vorzugsweise ist die Randfläche auf ihrer dem Schraubenkopf abgewandten Seite durch eine die Durchgangsöffnung hintergreifende Rastnase begrenzt. Die Schraube ist damit unverlierbar mit dem die Führung bildenden Teil verbunden.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine teilweise geschnittene Seitenansicht einer erfindungsgemäßen Verankerungsvorrichtung,
- Fig. 2: die Ansicht von Fig. 1 mit geschnittenem Verankerungselement,
- Fig. 3: die Verankerungsvorrichtung von Fig. 1 und 2 in einer teilweise geschnittenen Rückansicht,
- Fig. 4: die Ansicht von Fig. 3 mit geschnitten dargestelltem Verankerungselement,
- Fig. 5: ein in der Vorrichtung von Fig. 1 bis 4 verwendetes Verankerungselement in zwei perspektivischen Ansichten,
- Fig. 6: ein separates Trägerelement für das Verankerungselement von Fig. 5 in zwei verschiedenen perspektivischen Ansichten,
- Fig. 7: eine in der Verankerungsvorrichtung nach den Fig. 1 bis 6 verwendete Schraube,
- Fig. 8 und 9: eine weitere in der Verankerungsvorrichtung nach den Fig. 1 bis 6 verwendbare Schraube in verschiedenen perspektivischen Ansichten,
- Fig. 10: eine durch die Schraube von Fig. 8 und 9 hergestellte Schraubverbindung in gelöstem Zustand der Schraube,
- Fig. 11: die Schraubverbindung von Fig. 10 im geschlossenen Zustand der Schraubverbindung, und
- Fig. 12: die Wirkungsweise der Schraubverbindung von Fig. 10 und 11 erläuternde Darstellungen.

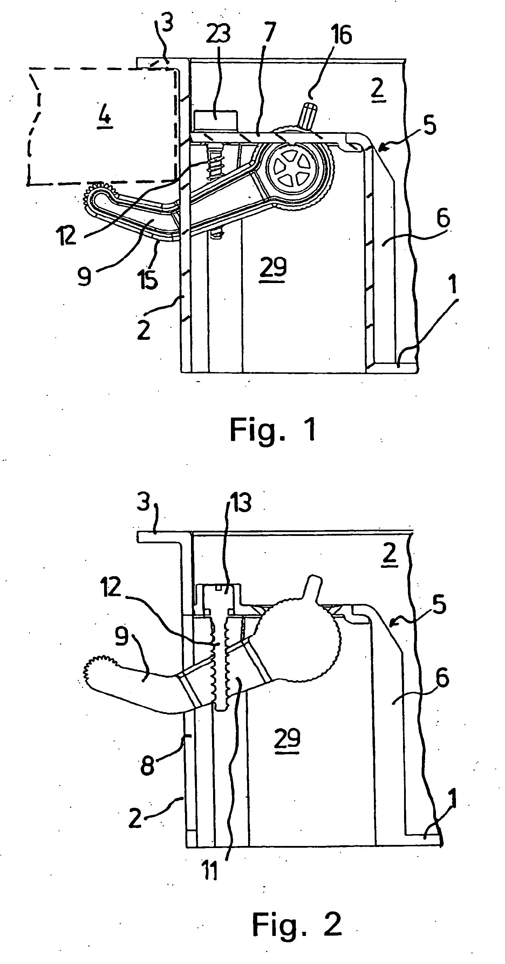

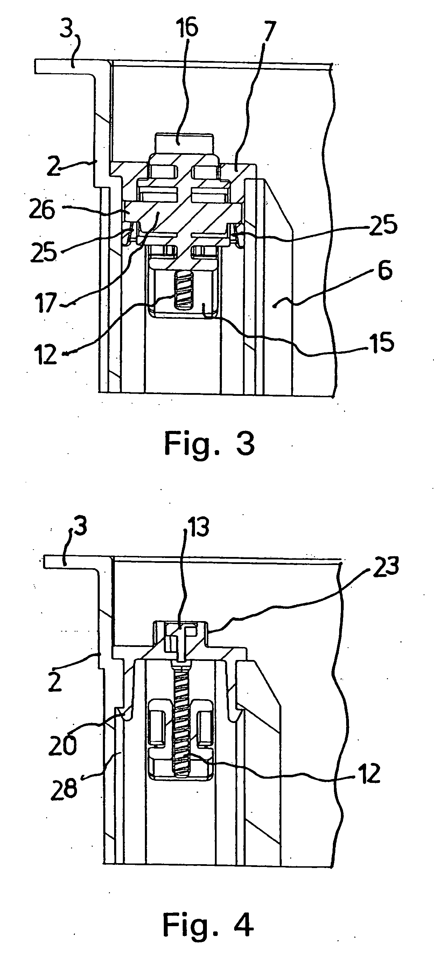

Ein in den Fig. 1 bis 4 geschnitten dargestellter Eckenabschnitt eines Verteilerkastens weist einen Kastenboden 1 und vier Seitenwände 2 mit je einer Abwinklung 3 am freien Rand auf. Durch die Abwinklungen 3 ist ein umlaufender Flansch gebildet, welcher bei Einsenkung des Verteilerkastens in eine Wandöffnung am Öffnungsrand gegen die Vorderseite einer Wandschale 4 einer z.B. doppelschaligen Wand anlegbar ist.

In den Ecken des Verteilerkastens ist jeweils ein angeformtes Gehäuse 5 vorgesehen, dessen Innenraum 29 die an der Ecke senkrecht aufeinander treffenden Seitenwände 2 sowie zwei dem Kasteninnenraum zugewandte Gehäusewände 6 begrenzen. Zur offenen Seite des Verteilerkastens hin ist der Gehäuseinnenraum 29 durch ein einrastbares, einen Gehäusedeckel bildendes Trägerelement 7 abgedeckt. Eine der beiden den Gehäuseinnenraum 29 begrenzenden Seitenwände 2 des Kastens weist eine Schlitzöffnung 8 auf.

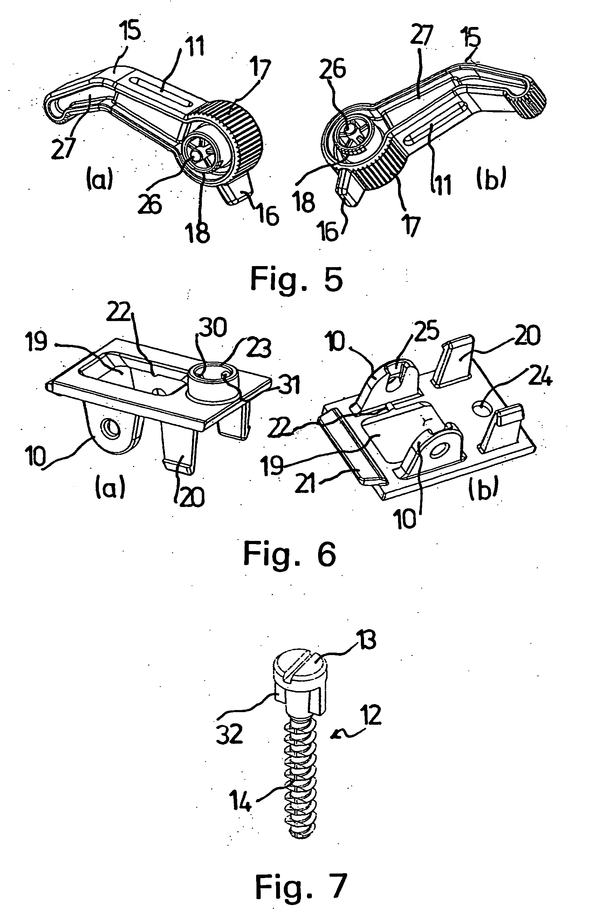

Das in Fig. 6 gesondert dargestellte Element 7 dient als Träger für ein Verankerungselement 9, das an von dem Trägerelement 7 an in den Gehäuseinnenraum 29 vorstehenden Trägerböcken 10 verschwenkbar gelagert ist. Das Verankerungselement 9 weist ein durchgehendes Langloch 11 auf, in das eine in Fig. 7 gesondert dargestellte Schraube 12 eingeführt ist, deren Kopf 13 das Trägerelement 7 hintergreift. Wie Fig. 7 erkennen lässt, weist das Gewinde der Schraube 12 bei 14 eine Abflachung auf. Auf der der Abflachung 14 gegenüberliegenden Seite des Schraubengewindes ist, in den Figuren nicht sichtbar, eine eben solche Abflachung vorgesehen.

Wie die Figuren erkennen lassen, ist das Verankerungselement 9 als zweiarmiger Hebel mit einem Hebelarm 15, welcher durch die Schlitzöffnung 8 hindurch aus dem Verteilerkasten heraus ausschwenkbar ist, und einem kurzen Hebelarm 16, der zur manuellen Verschwenkung des Verankerungselements 9 dient.

Der kurze Hebelarm 16 steht in dem gezeigten Ausführungsbeispiel radial von einem zylindrischen Teil 17 des Verankerungselement 9 vor, welcher seitliche Schwenkachsenzapfen 26 und auf den axialen Seiten ferner eine zu dem Schwenkachsenzapfen koaxiale Zahnung 18 aufweist, die den Schwenkachsenzapfen teilweise umschließt.

Ein mit dem kurzen Hebelarm 16 verbundener Abschnitt des zylindrischen Teils 17 ragt durch eine Öffnung 19 in dem Trägerelement 7 hindurch. Wie Fig. 6 ferner erkennen lässt, weist das Trägerelement 7 zwei Rastnasen 20 zum Einrasten am Verteilerkasten auf, wobei eine mit dem Trägerelement 7 verbundene Zunge 21 die Wand des Gehäuses 5 hintergreift.

Auf einander gegenüberliegenden Seiten der Öffnung 19 sind in die Zahnungen 18 eingreifende Rastnasen 22 gebildet. Alternativ könnte auch ein Rastnase in die am Umfang des zylindrischen Teils 17 gebildete Zahnung 9 greifen.

Das Trägerelement 7 weist ferner eine hohlzylindrische Führung 23 für den Kopf 13 der Schraube 12 auf, wobei die hohlzylindrische Führung 23 koaxial zu einer Öffnung 24 für die Schraube 12 angeordnet ist. Die Öffnung 24 kann als Langloch ausgebildet sein, in dessen Längswände das Gewinde der Schraube 12 einschneidet, so dass die Schraube in einer Drehstellung, in der sie relativ zu dem Langloch 11 bewegt werden kann, in der Öffnung 24 axial fixiert ist. Anstelle des Langlochs könnte angrenzend an die Öffnung 24 auch ein Materialklotz vorgesehen werden, in welchen das Gewinde der Schraube 12 einschneidet.

An den Trägerböcken 10 sind Nuten 25 gebildet, die ein Einrasten der Schwenkachsenzapfen 26 an den Trägerböcken 10 ermöglichen.

Wie Fig. 5 erkennen lässt, weist das Verankerungselement 9 seitliche Ausnehmungen 27 auf, durch die Materialhäufungen vermieden werden.

Im Folgenden wird die Funktionsweise der vorangehend beschriebenen Verankerungsvorrichtung erläutert.

Um einen Verteilerkasten in einer Wandöffnung verankern zu können, müssen die Verankerungselemente 9 zunächst innerhalb des Innenraums 29 der Gehäuse 5 angeordnet sein. In diesem Zustand lässt sich der Verteilerkasten in die Wandöffnung einsenken, bis die den Flansch bildenden Randabwinklungen 3 am Öffnungsrand gegen die Vorderseite der die Wandöffnung begrenzenden Wandschale 4 anliegt.

Durch manuelle Betätigung des Hebelarms 16 lässt sich das Verankerungselement 9 in die in Fig. 1 gezeigte Stellung verschwenken, in der der längere Hebelarm 15 die Wandschale 4 hintergreift und mit seinem Ende gegen die Wandschale 4 anliegt. Die in die jeweiligen Zahnungen 18 am zylindrischen Teil 17 des Verankerungselements 9 eingreifenden Rastnasen 22 halten die Verankerungselemente 9 in ihrer Schwenkstellung fest, so dass sie in der in Fig. 1 gezeigten Schwenkstellung verbleiben. Je nach der Dicke der Wandschale 4 kann diese Schwenkposition unterschiedlich sein.

Bei der Verschwenkung befand sich die Schraube 12 innerhalb des Langlochs 11 in einer Drehstellung, in welcher die einander gegenüberliegenden Abflachungen 14 des Gewindes den Längswänden des Langloch 11 zugewandt sind. Die Dicke der Schraube in dieser Drehstellung ist etwas kleiner als die Breite des Langloches. So lässt sich das Verankerungselement 9 in dieser Drehstellung der Schraube 12 ohne Behinderung durch die Schraube 12 verschwenken.

Zur endgültigen Verankerung des Verteilerkastens in der Wandöffnung werden die Schrauben 12 nun um 90° gedreht, wobei das Schraubengewinde in die einander gegenüberliegenden Längswände des Langlochs 11 einschneidet und bei der Drehung für ein Festziehen der Schraube und damit Festspannen des Verteilerkastens an der Wandschale sorgt.

In der Führung 23 sind zwei Anschlagnasen 30 und 31 für am Schraubenkopf 13 gebildete Anschlagflügel 32 vorgesehen. Durch die nach innen vorstehenden Anschlagnasen 30 und 31 ist gesichert, dass die Drehung der Schraube 90° nicht überschreitet und sich die Schraube somit nicht wieder lockern kann.

Die in Fig. 5 bis 7 gezeigten Teile können vormontiert und zusammen mit dem Verteilerkastenausgeliefert werden. Vor Ort kann dann die Verankerungseinrichtung dann wahlweise benutzt und über das am Verteilerkasten einrastbare Trägerelement mit dem Verteilerkasten verbunden werden.

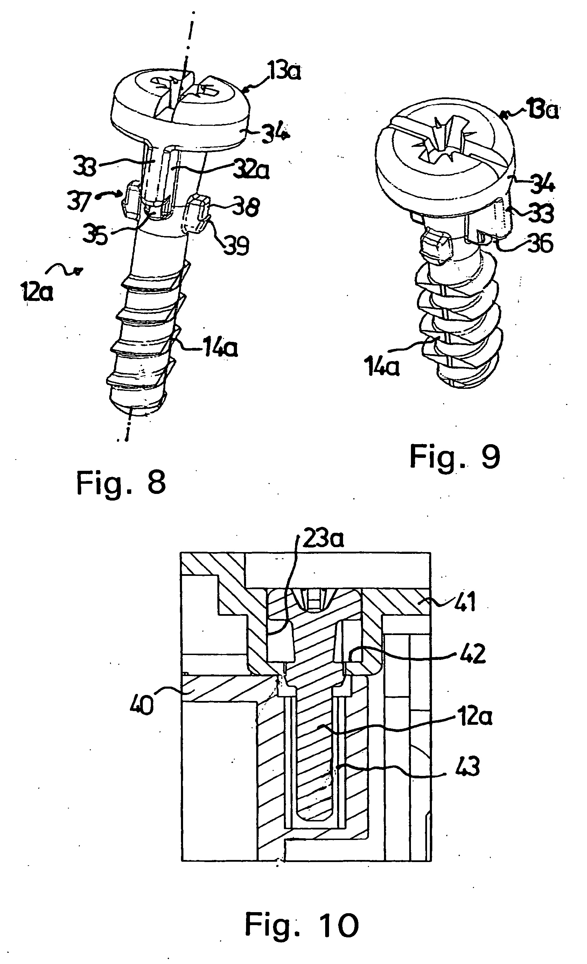

Es wird nun auf die Figuren 8 und 9 Bezug genommen, wo eine weitere, in der vorangehend beschriebenen Vorrichtung verwendbare Schraube 12a mit einem Schraubenkopf 13a und Gewindeabflachungen 14a in verschiedenen Ansichten gezeigt ist.

Wie die vorangehend beschriebene Schraube 12 weist auch die Schraube 12a in den Schraubenkopf 13a übergehende, vom Schraubenschaft in entgegengesetzten Richtungen vorstehende Anschlagflügel 32a auf. Zur Schraubenachse parallele Randflächen 33 der Anschlagflügel 32a schließen bündig mit einer zylindrischen Randfläche 34 des Schraubenkopfes 13a ab.

Auf ihrer dem Schraubenkopf 13a abgewandten Seite weisen die Anschlagflügel 32a jeweils eine Abstufung auf, durch die zur Schraubenachse parallele Stufenflächen 35 und zur Schraubenachse senkrechte Stufenflächen 36 gebildet sind.

Zu den Anschlagflügeln um 90° versetzt stehen von dem Schraubenschaft in entgegengesetzten Richtungen weitere Flügel 37 vor, deren dem Schraubenkopf 13a zugewandte Enden etwa bündig mit den zur Schraubenachse senkrechten Stufenflächen 36 der Anschlagflügel 32a abschließen. Die weiteren beiden Flügel 37 weisen jeweils eine zur Schraubenachse parallele Randfläche 38 auf, an die an ihrem dem Schraubenkopf 13a abgewandten Ende eine sägezahnartig vorstehende Rastnase 39 angrenzt.

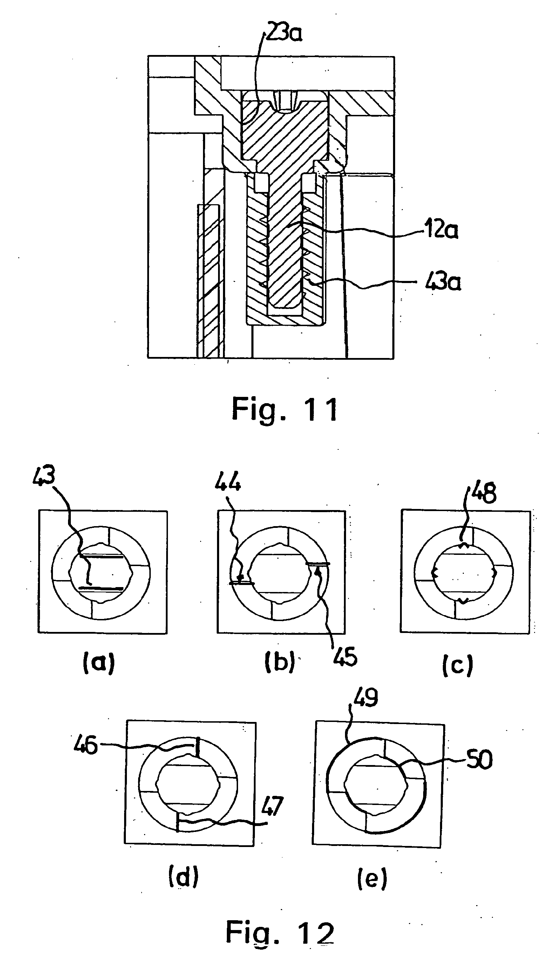

Gemäß Fig. 10 und 11 greift der mit den Flügeln 32a und 37 versehene Schraubenkopf in eine hohlzylindrische Führung 23 ein, die an einem der durch die Schraube 12a miteinander zu verbindenden Teile gebildet ist. Die Figuren 10 und 11 zeigen abweichend von der vorangehend beschriebenen Verankerungsvorrichtung als zu verbindende Teile beispielhaft einen Verteilerkasten 40 und eine Abdeckhaube 41 in Teildarstellung. Die Schraube 12a dient in diesem Fall zur Befestigung der Abdeckhaube 41 an dem Verteilerkasten 40.

In einer Bodenwand 42 der topfförmigen Führung 23a befindet sich eine Öffnung für die Durchführung der Schraube 12a. Die Rastnasen 39 hintergreifen diese Öffnung, so dass die Schraube 12a unverlierbar mit der Abdeckhaube 41 verbunden ist. Die Randflächen 33 der Anschlagflügel 32a liegen gegen die zylindrische Innenfläche der Führung 23a an. Die Stufenflächen 35 der Anschlagflügel 32a sowie die Randflächen 38 der weiteren Flügel 37 kommen zur Anlage gegen eine Innenfläche der Öffnung in der Bodenwand 42. Mit den Stufenflächen 36 sitzt die Schraube 12a auf der Bodenwand 42 auf.

Fig. 10 zeigt die Schraube 12a in ihrer gelösten Drehposition, in welcher sie mit dem abgeflachten Gewinde in ein entsprechendes, am Verteilerkasten 40 gebildetes Innengewinde 43 nur eingesteckt ist. Gemäß Fig. 12b liegen in dieser Drehposition die Anschlagflügel 32a gegen Anschlagflächen 44 und 45 an, welche durch in die Führung 23a hineinragende Vorsprünge gebildet sind.

Fig. 11 zeigt die Verschlussstellung, in welcher die Schraube 12a gegenüber der Offenstellung um 90° gedreht ist. Die Anschlagflügel 32a liegen in dieser Drehposition gegen Anschlagflächen 46 und 47 an, die an den von den Anschlagflächen 44 und 45 entfernten Enden der genannten Vorsprünge gebildet sind (Fig. 12d).

Wie in Fig. 12c hervorgehoben ist, sind in der genannten Innenfläche der Öffnung in der Bodenwand 42 der Führung 23c im Winkelabstand von 90° Rastkerben 48 gebildet, in welchen von den Stufenflächen 35 vorstehende Rastnasen sowohl in der Offen- als auch Verschlussstellung der Schraube 12a einrasten.

In Fig. 12e sind durch die Führung 23a gebildete Führungsflächen 49 und 50 hervorgehoben. Die Randflächen 33 der Anschlagflügel 32a liegen gegen die Führungsflächen 49, die Randflächen 38 der weiteren Flügel 37 gegen die Führungsflächen 50 an.

Die Schraube ist exakt geführt und die Offen- und Verschlussstellung der Schraube 12a durch die beschriebenen Anschläge exakt festgelegt. Ungewolltes Lösen oder Verschließen durch Überschreiten der betreffenden Drehstellungen ist ausgeschlossen. Das Erreichen der Öffnungs- bzw. Schließposition der Schraube 12a ist durch die Einrastung deutlich spürbar. Durch das Aufsitzen der Anschlagflügel 32a mit ihrer Stufenfläche 36 ist die Schraube 12a axial genau festgelegt und so ein problemloses Ineinandergreifen der verbliebenen Gewindeteile beim Drehen der Schraube gesichert.

Die Schraube 12a bildet ein Schnellverschlusselement, das sich kurzfristig durch einen Steckbewegung in eine der Verschlussposition nahe Ausgangsstellung und dann durch Drehung nur noch um 90° in die Verschlussposition bringen lässt.

## Patentansprüche

1. Vorrichtung zur Befestigung eines Installationskastens, insbesondere Verteilerkastens, in einer Öffnung in einer Wandschale (4), wobei der Installationskasten mit einem an seinem Öffnungsrand gebildeten Anschlag (3) am Rand der Wandschale (4) gegen die Vorderseite der Wandschale (4) anliegt, mit einem seitlich über die Kastenkontur hinaus ausschwenkbaren Verankerungselement (9), das die Wandschale (4) an ihrem Öffnungsrand hintergreift sowie mit einem von der Montageseite des Installationskasten her zugänglichen, eine Schraube umfassenden Schwenk- und Spannmechanismus für das Verankerungselement (9), **dadurch gekennzeichnet,**
**dass** der Schwenk- und Spannmechanismus eine in ein Langloch (11) in dem Verankerungselement (9) einführbare Schraube (12) mit wenigstens einer Abflachung (14) des Schraubenquerschnitts sowie Einrichtungen (16) zur direkten manuellen Verschwenkung des Verankerungselements (9) unter Bewegung der abgeflachten Schraube (12) relativ zum Langloch (11) aufweist.

2. Vorrichtung nach Anspruch 1,
**dadurch gekennzeichnet,**
**dass** an der Schraube (12) zwei einander gegenüberliegende Abflachungen (14) gebildet sind.

3. Vorrichtung nach Anspruch 1 oder 2,
**dadurch gekennzeichnet,**
**dass** das Schraubengewinde in einander gegenüberliegende Wände des Langlochs (11) einschneidet.

4. Vorrichtung nach einem der Ansprüche 1 bis 3,
**dadurch gekennzeichnet,**
**dass** von dem Schraubengewinde unabhängige Einrichtungen zum Halten des Verankerungselements (9) in seiner verschwenkten Stellung vorgesehen sind.

5. Vorrichtung nach Anspruch 4,
**dadurch gekennzeichnet,**
**dass** die Halteeinrichtungen eine schwergängige Drehlagerung für das Verankerungselement (9) umfassen.

6. Vorrichtung nach Anspruch 4 oder 5,
**dadurch gekennzeichnet,**
**dass** die Halteeinrichtungen eine Rastung (18,22) für das Verankerungselement (9) umfassen.

7. Vorrichtung nach einem der Ansprüche 4 bis 6,
**dadurch gekennzeichnet,**
**dass** die Halteeinrichtungen eine Klemmhalterung für die in das Langloch eingeführte Schraube umfassen.

8. Vorrichtung nach einem der Ansprüche 1 bis 7,
**dadurch gekennzeichnet,**
**dass** die Einrichtungen zur manuellen Verschwenkung des Verankerungselements (9) einen mit dem Verankerungselement (9) verbundenen Hebelarm (16) umfassen.

9. Vorrichtung nach Anspruch 8,
**dadurch gekennzeichnet,**
**dass** das Verankerungselement (9) einen zweiarmigen Hebel mit einem kurzen Hebelarm (16) und einem langen Hebelarm (15) bildet.

10. Vorrichtung nach einem der Ansprüche 1 bis 9,
**dadurch gekennzeichnet,**
**dass** die Verankerungsvorrichtung eine das Verankerungselement (9) und ggf. die Schraube (12) umfassende, mit dem Installationskasten verbindbare Baueinheit umfasst.

11. Vorrichtung nach Anspruch 10,
**dadurch gekennzeichnet,**
**dass** die Baueinheit über ein Trägerelement (7), an dem das Verankerungselement (9) verschwenkbar gelagert ist, mit dem Installationskasten verbindbar ist.

12. Vorrichtung nach Anspruch 11,
**dadurch gekennzeichnet,**
**dass** das Trägerelement (7) zur Verbindung mit dem Installationskasten an dem Installationskasten einrastbar ist.

13. Vorrichtung nach einem der Ansprüche 4 bis 12,
**dadurch gekennzeichnet,**
**dass** die Halteeinrichtungen eine zur Schwenkachse des Verankerungselements (9) koaxiale Zahnung (18) aufweisen, in welche ein Rastelement (22), insbesondere eine an dem Trägerelement (7) gebildete Rastnase (22), eingreift.

14. Vorrichtung nach einem der Ansprüche 1 bis 13,
**dadurch gekennzeichnet,**
**dass** das Trägerelement (7) eine Abdeckung für eine in der Ecke des Verteilerkastens angeordnetes, das Verankerungselement in der Öffnungsstellung aufnehmendes Gehäuse (5) bildet.

15. Vorrichtung nach einem der Ansprüche 1 bis 14,
**dadurch gekennzeichnet,**
**dass** an der Unterseite des Schraubenkopfes (13) ein Anschlag (32) vorgesehen ist, der mit die Drehung der Schraube (12) begrenzenden Anschlägen (30,31;44-47) in einer hohlzylindrischen Schraubenführung (23) zusammenwirkt.

## Claims

1. Arrangement for fastening an installation box, in particular a distribution box, in an opening in a wall shell (4), wherein the installation box butts, by way of a stop (3) formed on its opening periphery, against the periphery of the wall shell (4), on the front side of the wall shell (4), having an anchoring element (9), which can be pivoted out laterally beyond the box contour and engages behind the wall shell (4) on the opening periphery thereof, and having a pivoting and tensioning mechanism for the anchoring element (9), this mechanism being accessible from the mounting side of the installation box and comprising a screw,
**characterized**
**in that** the pivoting and tensioning mechanism has a screw (12), which can be introduced into a slot (11) in the anchoring element (9) and has at least one flattened portion (14) in cross section, and devices (16) for the direct manual pivoting of the anchoring element (9), with the flattened screw (12) being moved relative to the slot (11) in the process.

2. Arrangement according to Claim 1,
**characterized**
**in that** two flattened portions (14) are formed opposite one another on the screw (12).

3. Arrangement according to Claim 1 or 2,
**characterized**
**in that** the screw thread cuts into mutually opposite walls of the slot (11).

4. Arrangement according to one of Claims 1 to 3,
**characterized**
**by** the provision of devices which are independent of the screw thread and are intended for retaining the anchoring element (9) in its pivoted position.

5. Arrangement according to Claim 4,
**characterized**
**in that** the retaining devices comprise a slow-acting rotary bearing means for the anchoring element (9).

6. Arrangement according to Claim 4 or 5,
**characterized**
**in that** the retaining devices comprise a latching means (18, 22) for the anchoring element (9).

7. Arrangement according to one of Claims 4 to 6,
**characterized**
**in that** the retaining devices comprise a clamping holder for the screw introduced into the slot.

8. Arrangement according to one of Claims 1 to 7,
**characterized**
**in that** the devices for the manual pivoting of the anchoring element (9) comprise a lever arm (16) connected to the anchoring element (9).

9. Arrangement according to Claim 8,
**characterized**
**in that** the anchoring element (9) forms a two-armed lever with a short lever arm (16) and a long lever arm (15).

10. Arrangement according to one of Claims 1 to 9,
**characterized**
**in that** the anchoring arrangement comprises a structural unit which comprises the anchoring element (9) and possibly the screw (12) and can be connected to the installation box.

11. Arrangement according to Claim 10,
**characterized**
**in that** the structural unit can be connected to the installation box via a carrier element (7), on which the anchoring element (9) is mounted in a pivotable manner.

12. Arrangement according to Claim 11,
**characterized**
**in that** the carrier element (7) can be latched in on the installation box in order to be connected thereto.

13. Arrangement according to one of Claims 4 to 12,
**characterized**
**in that** the retaining devices have a toothing formation (18) which is coaxial with the pivot axis of the anchoring element (9) and in which a latching element (22), in particular a latching nose (22) formed on the carrier element (7), engages.

14. Arrangement according to one of Claims 1 to 13,
**characterized**
**in that** the carrier element (7) forms a covering for a housing (5) which is arranged in the corner of the distribution box and accommodates the anchoring element in the open position.

15. Arrangement according to one of Claims 1 to 14,
**characterized**
**in that** the underside of the screw head (13) has provided on it a stop (32) which interacts with stops (30, 31; 44-47) in a hollow-cylindrical screw guide (23), these latter stops limiting the rotation of the screw (12).

## Revendications

1. Dispositif pour la fixation d'un coffret d'installation électrique, en particulier d'un coffret distributeur, dans une ouverture dans une coque murale (4), dans lequel le coffret d'installation est appliqué au moyen d'une butée (3) formée à la bordure de son ouverture contre la face antérieure de la coque murale (4) à la bordure de la coque murale (4), le dispositif comprenant un élément d'ancrage (9) susceptible d'être pivoté latéralement au-delà du contour du coffret, qui engage la coque murale (4) par l'arrière à la bordure de son ouverture, et comprenant un mécanisme de pivotement et de serrage, accessible depuis le côté du montage du coffret d'installation et incluant une vis, pour l'élément d'ancrage (9),
**caractérisé en ce que**
le mécanisme de pivotement et de serrage comprend une vis (12) susceptible d'être introduite dans un trou oblong (11) dans l'élément d'ancrage (9) avec au moins un aplatissement (14) de la section de la vis ainsi que des moyens (16) pour faire pivoter manuellement directement l'élément d'ancrage (9) par déplacement de la vis aplatie (12) par rapport au trou oblong (11).

2. Dispositif selon la revendication 1,
**caractérisé en ce que** deux aplatissements mutuellement opposés (14) sont formés sur la vis (12).

3. Dispositif selon la revendication 1 ou 2,
**caractérisé en ce que** le filetage taille dans des parois mutuellement opposées du trou oblong (11).

4. Dispositif selon l'une des revendications 1 à 3,
**caractérisé en ce qu'**il est prévu des moyens, indépendants du filetage de la vis, pour maintenir l'élément d'ancrage (9) dans sa position pivotée.

5. Dispositif selon la revendication 4,
**caractérisé en ce que** les moyens de maintien comprennent un montage tournant à rotation difficile pour l'élément d'ancrage (9).

6. Dispositif selon la revendication 4 ou 5,
**caractérisé en ce que** les moyens de maintien comprennent un enclenchement (18, 22) pour l'élément d'ancrage (9).

7. Dispositif selon l'une des revendications 4 à 6,
**caractérisé en ce que** les moyens de maintien comprennent une monture à serrage pour la vis introduite dans le trou oblong.

8. Dispositif selon l'une des revendications 1 à 7,
**caractérisé en ce que** les moyens pour le pivotement manuel de l'élément d'ancrage (9) comprennent un bras de levier (16) relié à l'élément d'ancrage (9).

9. Dispositif selon la revendication 8,
**caractérisé en ce que** l'élément d'ancrage (9) forme un levier à deux bras avec un bras de levier court (16) et un bras de levier long (15).

10. Dispositif selon l'une des revendications 1 à 9,
**caractérisé en ce que** le dispositif d'ancrage comprend une unité structurelle qui inclut l'élément d'ancrage (9) et le cas échéant la vis (12), et susceptible d'être reliée au coffret d'installation.

11. Dispositif selon la revendication 10,
**caractérisé en ce que** l'unité structurelle est susceptible d'être reliée au coffret d'installation via un élément porteur (7) sur lequel l'élément d'ancrage (9) est monté avec possibilité de pivotement.

12. Dispositif selon la revendication 11,
**caractérisé en ce que** l'élément porteur (7) est susceptible d'être enclenché sur le coffret d'installation pour la liaison avec le coffret d'installation.

13. Dispositif selon l'une des revendications 4 à 12,
**caractérisé en ce que** les moyens de maintien comprennent une denture (18) coaxiale à l'axe de pivotement de que l'élément d'ancrage (9), dans laquelle s'engage un élément d'enclenchement (22), en particulier un ergot d'enclenchement (22) formé sur l'élément porteur (7).

14. Dispositif selon l'une des revendications 1 à 13,
**caractérisé en ce que** que l'élément porteur (7) forme un recouvrement pour un boîtier (5) agencé dans le coin du coffret distributeur, qui reçoit l'élément d'ancrage dans la position ouverte.

15. Dispositif selon l'une des revendications 1 à 14,
**caractérisé en ce qu'**il est prévu une butée (32) sur le côté inférieur de la tête de vis (13), qui coopère avec des butées (30, 31 ; 44-47) limitant la rotation de la vis (12), dans un guidage à vis (23) cylindrique creux.
